# EUROPEAN PATENT SPECIFICATION

(11) **EP 0 483 887 B1**
(45) Date of publication and mention of the grant of the patent: **02.08.2000**
(21) Application number: 91120960.9
(22) Date of filing: 26.08.1987
(51) Int. Cl.: B29B 7/88, B29B 9/06, B29B 13/10, C09D 127/16, C09D 5/03, B05D 1/00

(54) **PVdF - based powder coatings**
Pulverbeschichtung auf Polyvinylidenfluorid-Basis
Revêtement poudreux sur base de fluorure de polyvinylidène

(30) Priority: 01.09.1986 GB 8621109
(43) Date of publication of application: 06.05.1992
(62) Divisional of application: 87870118.4
(73) Proprietor: FINA RESEARCH S.A., B-7181 Feluy (BE)
(72) Inventor: Sietses, Willem, NL-1423 GP Uithoorn (NL); Plantenga, Tjalling Meinoud, NL-3633 EJ Vreeland (NL); Dekerk, Jean-Paul, B-6700 Arlon (BE)

(56) References cited:
- US-A- 3 253 060
- US-A- 4 179 542

## Description

The present invention relates to a process for preparing pigmented powder coating products, based on poly(vinylidene fluoride) hereinafter referred to as PVdF, and to a process for coating a substrate with a pigmented PVdF coating. In particular, the present invention relates to a process for obtaining pigmented PVdF-based coatings without using solvents, more particularly for obtaining pigmented PVdF-based protective coatings.

PVdF-based coatings are known to be very useful as protective coatings for a variety of substrates due to the good chemical and weathering resistance and to the thermal stability of PVdF. The general known technique used for preparing them is to prepare a dispersion of PVdF in a suitable solvent for application by known means onto the required substrate which is thereafter subjected to a heat treatment.

The solvent used is generally known in the prior art as "latent solvent", and it is described therein as an organic solvent which has no significant action on PVdF at room temperature but which at an elevated temperature exerts a sufficient solvent action.

However, although the known systems may give good results, environmental protection laws throughout the world, but mainly in Europe and in the U.S.A., are making it increasingly difficult to handle solvent-based systems. Further, the recovery of the solvent is a costly procedure. Accordingly, there is a need in the art for solventless PVdF-based coatings.

It is also known in the prior art to obtain pigmented PVdF-based coatings from a mixture of powdered pigment and PVdF. However, such a mixture is hardly homogeneous. Further, the pigment is not perfectly wetted by the resin, and it is believed that the coatings obtained have no long term stability because of the presence of voids or empty spaces around the pigment particles. Also, the mechanical properties of such coatings are rather bad. Accordingly, there is a need in the art for an improved solventless process for obtaining pigmented PVdF coatings.

US-A-3253060 discloses molding compositions comprising homogeneous physical mixtures of polyvinylidene fluoride and solid polymethyl methacrylate resin, the latter respresenting 1 to 25 wt % of the mixtures.

US-A-4179542 discloses a primer coating containing, as the resin binder, 34-70 wt % of a thermoplastic resin (selected from vinylidene fluoride homopolymers and certain copolymers), 18-45 wt % (based on the weight of the thermoplastic resin) of a heat-curable epoxy resin, and a filler pigment consisting of (a) finely divided mica and (b) 20-40 wt % (based on the weight of the mica) of metallic powder.

The present invention aims to provide pigmented PVdF-based powder coatings which are prepared without the use of any solvent.

It is an object of the present invention to provide pigmented PVdF-based powder coating products.

It is another object of the present invention to provide a process for preparing pigmented PVdF-based powder coating products without the use of solvents.

It is yet another object of the present invention to provide stable pigmented PVdF-based coatings without the use of solvents and the process for preparing them.

The present invention further provides a process for coating a substrate with a pigmented PVdF-based coating, the process comprising the steps of :
(a) applying the pigmented PVdF-based powder on the substrate; and
(b) subjecting the coating to a heat treatment, preferably at a temperature of from 180 to 260°C.

According to a preferred embodiment of this invention, the pigmented PVdF-based powder is applied on a substrate which has been previously covered with a primer coating, such as an epoxy-type resin.

Embodiments of the invention will now be described by way of example only.

The term PVdF used herein refers not only to the homopolymer of vinylidene fluoride, but also to the copolymers prepared from at least 90% by weight of vinylidene fluoride monomers. Suitable copolymers include those with fluorinated comonomers, as for example tetrafluoroethylene, hexafluoropropene, vinylfluoride, and the like. However, the homopolymer is generally used.

The preferred PVdF resins are those having a molecular weight in the range of from 10 000 to 70 000, most preferably of from 30 000 to 50 000, a melting temperature of from 165 to 170°C, a melt flow index (according to ASTM D1238) of from 10 to 50 g/10 min, most preferably of from 10 to 30 g/10 min, and a melt viscosity (according to ASTM D 3835) of from 6 000 to 12 000 P at 230°C, most preferably of from 7 000 to 10 000 P. Coatings made from PVdF resins with molecular weights lower than about 10 000 do not have good mechanical properties. On the other hand, powders obtained with PVdF having a molecular weight greater than about 70 000 remain excessively viscous during the heat treatment.

The PVdF is mixed with one or several compatible thermoplastic resins. It has however been found that it is most advantageous to use a thermoplastic poly(methylmethacrylate) resin (hereinafter referred to as PMMA), which is therefore preferred. As the thermoplastic PMMA resin, there may be used a thermoplastic resin obtained by (co)polymerisation of at least 75 wt % of an alkyl methacrylate, the other comonomers being one or several olefinically unsaturated comonomers, preferably of the alkyl (meth)acrylate type. The esters are formed by the reaction of the acrylic or methacrylic acid with suitable alcohols, for example, methyl alcohol, ethyl alcohol, propyl alcohol, butyl alcohol and 2-ethylhexyl alcohol. Generally, the larger the alcohol portion of the ester, the softer and more flexible the resultant resin. Also, generally, the methacrylic esters form harder films than the corresponding acrylic esters. As examples of such resins, there may be cited polymethylmethacrylate, copolymers of methylmethacrylate with ethyl acrylate, butyl methacrylate, isobutyl methacrylate, acrylic acid or methacrylic acid, and the like. The most preferred PMMA resins are those which exhibit a viscosity of from 7 to 17 P in 40% solution in a 95:5 by weight mixture of toluene and ethylene glycol methyl ether.

When a PMMA resin is used, the weight ratio of PVdF/PMMA may vary widely from 80:20 to 40:60, and preferably from 75:25 to 65:35.

The mixture of PVdF resin, the one or more thermoplastic resins and the one or more pigments may additionally contain a flow promoting agent. Although a flow promoting agent is not essential to the invention, it helps obtaining the high quality of coating surface required in the art. As the flow promoting agent, there are generally used acrylic resins having a relatively low molecular weight (e.g. of about 20,000). The amount of flow promoting agent may vary widely from 0 to 3 wt %, based on the total weight of the mixture, but the amount preferably used is of about 1 wt % based on the total weight of the mixture.

The use of pigments in the coating composition is essential. Indeed, if no pigment is used, a clearcoat or varnish can be obtained; however, the resulting coating is unevenly milky, which is undesirable. Further, such clearcoats have a lesser resistance to high temperature, and most important they insufficiently absorb ultraviolet light which will therefore be able to contribute to the degradation of the primer.

When pigments are used, there may be used any pigment or combination of pigments, provided they are resistant to the subsequent heat treatment. The choice of pigments may be made in accordance with what is known in the art for PVdF-based wet coatings. The amount of pigment used may vary widely, especially according to its hiding power. For example, a white topcoat prepared exclusively with titanium dioxide may require about 35 wt % of said pigment. Other pigments with better hiding properties may require lower amounts.

Extruding and granulating the resulting mixture can be made by the usual procedures. The operating procedure is easily determined by one skilled in that art. In particular, there may be used a single or double screw extruder. The processing temperature is usually of from 190°C to 240°C, preferably of about 220°C. The dimensions of the pellets are not critical parameters; they are usually of about 3 mm diameter and 2 mm length.

Cryogenically grinding the pellets may be done by any suitable means which allows suitable particles to be obtained. The powder should comprise particles of size and shape suitable for achieving constant flow through the application equipment, mainly in order to obtain a constant thickness of the coating. It is preferred that the shape of the particles be as spherical as possible, because the resulting powder has better flowing properties. Regarding the size of the particles, the grinding step is usually associated with a sieving step for eliminating the largest size particles, i.e. those particles exceeding about three times the desired thickness of the coating. On the other hand, excessively small particles (i.e. < 1.5 µm) are to be avoided, because they are a hazard for health and because they tend to block the transport lines during application. According to the invention, it is preferred that the particles of the ground PVdF-based powder have an average particle size of from 0.03 to 0.05 mm.

The grinding step is usually carried out at a temperature equal to or lower than about - 50°C. The compositions containing lower amounts of PVdF should be grinded at lower temperatures, i.e. below about - 60°C. In any case, the pellets are preferably cooled, usually in liquid nitrogen, immediately before grinding.

The Applicant has unexpectedly found that it is preferable to use hammer mills wherein a rotating shaft carries hammers which break the pellets on fixed shapes in the casing of the hammer mill and hammer them through a sieving lining at the bottom of the hammer mill.Sieve openings of about 0.2 mm have been found particularly appropriate.

The resulting powder may be applied on the substrate by any means suitable for achieving an even distribution of the particles. In particular, there may be used any electrostatic spray application apparatus, whereby the charged particles are sprayed onto the oppositely charged substrate. Alternative techniques are cloud chamber, fluidised bed, and even in some cases triboelectric coating, and the like. Such techniques are well known in the art and need not be described further.

The PVdF-based powder may be applied directly onto the substrate, but it may also be applied over a suitable primer coating. In particular, it may be applied over primer coatings based on epoxy-type resins, more particularly on epoxy-phenolic resins, which are known in the art as primers for similar fluorinated polymers. It is also possible to apply the PVdF-based powder over primer coatings based on epoxy-type resins which contain up to 20 wt % of PVdF resin powder.

After the PVdF-based powder coating has been applied to the substrate, it must be subjected to a heat treatment. The coated substrate is passed into an heated oven wherein the coating is finally baked at a temperature of from 180°C to 260°C. The temperature used in this step should be higher than the crystalline melting point of the PVdF-based powder, which melting point is easily determined experimentally. On the other hand, excessively high temperatures have a yellowing effect on the finished coating. The duration of the heating step is determined by any suitable method which is known in the art, taking into account that an insufficient duration is detrimental to the surface hardness.

Finally, the coating and its substrate can be either slowly cooled in air or quenched in water.

In order to further illustrate the invention, the following examples are given.

### Example 1

A mixture was prepared from the following components :
- 46.2: parts by weight (p.b.w.)of a commercially available PVdF resin having a molecular weight of about 45 000, a melt flow index (according to ASTM D 1238) of about 20 g/10 min, and a melt viscosity (according to ASTM D 3835) of about 9 000 P at 230°C;
- 19.8: p.b.w. of a commercially available thermoplastic methylmethacrylate polymer having a viscosity of about 12 P in 40% solution in a 95:5 by weight mixture of toluene and ethylene glycol methyl ether;
- 1: p.b.w. of an acrylic polymer, prepared from 30 wt % of ethylacrylate and 70 wt % of 2-ethylhexylacrylate and having a viscosity of about 1.06 Pa.s at 98.9°C, or of about 590 Poises (97.6% solution in xylene); and
- 33: p.b.w. of a white TiO₂ pigment, commercially available as Titanium white KRONOS-2160. Prepared according to the chlorine process, it has a density of 3.9 g/cm³; it contains 90% TiO₂, and it is surface-treated with alumina and silica compounds to increase its weathering resistance. KRONOS is a registered Trade Mark of KRONOS TITAN.

The resulting mixture was extruded under the following conditions, giving pellets of 3 mm diameter and about 2 mm length :
- twin screw extruder
- screw rotation : 200 rpm
- load : 85%
- temperature profile : 170°C at hopper exit, rising to 220°C in the middle of the screw, then down to 190°C up to the end of the screw
- temperature of the material at the exit : 195°C.

The pellets were cooled in liquid nitrogen down to at least - 150°C, then grinded at a temperature not higher than about - 50°C in a hammer mill and sieved to eliminate particles larger than about 150 µm. In the hammer mill, a rotating shaft carries hammers which break the pellets on fixed shapes in the casing of the hammer mill and hammer them through a sieving lining at the bottom of the hammer mill. The particle size distribution was measured : 99% of the particles had a size below 90 µm, and 40% below 32 µm. Only 5% had a size below 15 µm.

The resulting powder was applied by an electrostatic spray process on a 2 mm thick chromated aluminium plate previously covered by a 5 µm layer of an epoxy primer. The epoxy primer had the following composition :
- 20: p.b.w. of commercially available epoxy resin having a molecular weight of about 6750 and an epoxy equivalent of about 3200
- 50: p.b.w. of solvents,
- 20: p.b.w. of pigment and extenders,
- 2: p.b.w. of thixotropic agent,
- 2: p.b.w. of hardener, and
- 0.1: p.b.w. of catalyst.

The coated substrate was then heated 9 minutes at 240°C (object temperature), giving a 50 µm PVdF-based top coating.

The properties of the coating were determined :

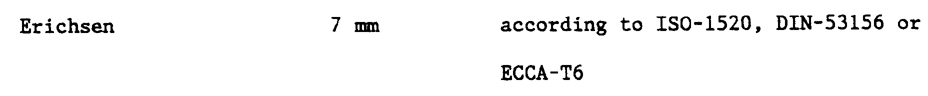

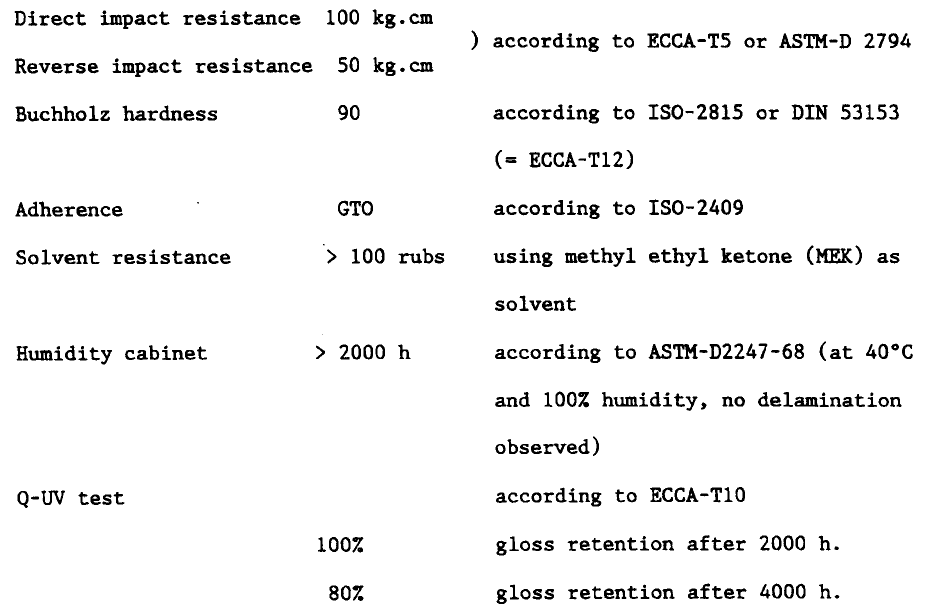

### Comparative example A

A PVdF-based composition containing solvents was prepared by mixing the following ingredients :
- 20: p.b.w. of a commercially available highly crystalline, high molecular weight PVdF resin, having a molecular weight of about 350 000 and a melt viscosity (according to ASTM D 3835) of about 31 000 P
- 20: p.b.w. of thermoplastic PMMA (as described in Example 1)
- 10: p.b.w. of dimethylphthalate
- 20: p.b.w. of TiO₂ pigment
- 3: p.b.w. of additives (levelling agent; flow improver,...)
- 30: p.b.w. of solvent (isophorone, ethylglycol acetate, butylglycol)

The resulting solution was sprayed on a 2 mm thick chromated aluminium plate previously covered by a 5 µm layer of an epoxy primer. The coated substrate was then heated 1 minute at 245°C, giving a 30 µm PVdF-based top coating.

The following properties were determined as in Example 1 :

| | |
|---|---|
| Erichsen | 6 mm |
| Reverse impact resistance | 150 kg.cm |
| Buchholz hardness | 100 |
| Adherence | GTO |
| Solvent resistance | > 100 rubs |
| Humidity cabinet | > 2000 h without delamination |
| Q-UV test | 85% gloss retention after 2000 h |

This example shows that the PVdF-based compositions containing solvents, which create environmental and other problems due to the evaporation of the solvents, have no significantly better properties than the PVdF-based powder coatings of the invention.

### Comparative example B

The pellets obtained in Example 1 were cryogenically grinded in a laboratory scale needle mill (ALPINE, type 100 lU). The particle size distribution was as follows : 34% below or equal to 32 µm; 16% equal to or above 90 µm. No satisfactory coating was obtained using this powder.

Although the Applicant does not wish to be bound by any theory, it is probable that this milling procedure gives inappropriate particle shapes, as sieving the particles does not appear to significantly improve the resulting coatings.

### Comparative example C

A polyester powder coating was prepared according to the procedure described in British Patent Specification n° 1,529,422, more specifically according to Example 1 thereof.

The following properties were determined as in Example 1 of the present invention :

| | |
|---|---|
| Erichsen | 8.5 mm |
| Direct impact resistance | 200 kg.cm |
| Reverse impact resistance | 50 kg.cm |
| Buchholz hardness | 90 |
| Adherence | GTO |
| Solvent resistance | 3 rubs |
| Humidity cabinet | > 1000 h without delamination |
| Q-UV test | 40% gloss retention after 500 h |

This comparative example confirms that polyester powder coatings have an insufficient resistance to weathering, as evidenced by the results of the Q-UV test.

### Example 2

The same powder as obtained in Example 1 was electrostatically sprayed directly onto a 2 mm thick thermic galvanized steel plate previously covered by a 5 µm layer of an epoxy primer as described in Example 1. The coated substrate was heated 9 minutes at 240°C, whereby a 50 µm PVdF-based top coating was obtained.

The properties determined were similar to those determined in Example 1.

### Examules 3-8 and comparative example D

PVdF-based coatings were prepared, as in Examples 1 and 2 and using the same PVdF, PMMA and flow improver, from different mixture compositions as mentioned in the following Table (all pigment names are Trade Names). However, in Examples 6 and 8, the flow improver was a commercial powder form aid, available as Modaflow Powder III (Modaflow is a registered Trade Name).

**TABLE**

| | | | | | | | |
|---|---|---|---|---|---|---|---|
| (all values in p.b.w.) | | | | | | | |

| | Ex.3 | Ex.4 | Ex.5 | Ex.6 | Ex.7 | Ex.8 | Comp. Ex.D |
|---|---|---|---|---|---|---|---|
| colour | white | brown | brown | beige | grey | brown | brown |
| PVdF | 44.8 | 63.3 | 44.5 | 53.8 | 55.9 | 58.1 | 26.7 |
| PMMA | 19.2 | 26.7 | 44.5 | 23.1 | 24.0 | 24.9 | 62.3 |
| flow improver | 1.0 | 1.0 | 1.0 | 1.0 | 1.0 | 1.0 | 1.0 |
| Ti0₂ Kronos 2160 | 35.0 | 0.45 | 0.45 | 20.2 | 16.4 | | 0.45 |
| Yellow AC 5047 | | 3.65 | 3.65 | | | 3.45 | 3.65 |
| Red 180 | | 4.90 | 4.90 | | | | 4.90 |
| Flammrus 101 | | 1.00 | 1.00 | 0.01 | 0.13 | 0.6 | 1.00 |
| Sicotans Yellow L 2110 | | | | 1.83 | 2.67 | | |
| Monastral Green | | | | | 0.002 | | |
| Lankowax TF 1778 | | | | | | 1.0 | |
| Plastorit | | | | | | 10.0 | |
| Bayferrox 130 BM | | | | | | 0.92 | |

| Properties | | | | | | | |
|---|---|---|---|---|---|---|---|
| Erichsen (mm) | 6.7 | > 8 | > 8 | > 8 | > 8 | > 8 | > 8 |
| Conical mandrel | 22 | 0 | 69 | 10 | 0 | 10 | 69 |
| Impact | 100 | 100 | 40 | 100 | 100 | 100 | 6 |
| QUV test (1500 h) | 100% | 100% | 100% | 100% | 100% | 100% | 92% |
| Buchholz hardness | 97 | 102 | 79 | 98 | 93 | 97 | 75 |

The composition of Comparative Example D contains an insufficient amount of PVdF and gives coatings which do not have a sufficient resistance to weathering.

### Examples 9 and 10

Two identical lots of pellets, prepared according to Example 1, were grinded in the same hammer mill according to the procedure described in Example 1. However, the sieve had openings of 0.5 mm (Example 9) and 0.3 mm (Example 10). The particle size distribution was as follows :

| | | Ex.9 | Ex.10 |
|---|---|---|---|
| | < 50 µm | 39 % | 67 % |
| > 50 µm | < 100 µm | 45.5 % | 29.5 % |
| > 100 µm | < 150 µm | 12.5 % | 2.0 % |
| > 150 µm | | 3.0 % | 1.5 % |

The coatings (produced according to Example 1) were smoother when using the powder of Example 10.

## Claims

1. Pigmented PVdF-based powder coatings product, consisting of a mixture in powder form of :
(i) poly(vinylidene fluoride) [PVdF] resin
(ii) one or more compatible thermoplastic resins;
(iii) one or more pigments;
(iv) optionally up to 3wt% of a flow promoting agent.

2. Product according to Claim 1, wherein the PVdF resin has a molecular weight of from 10.000 to 70.000.

3. Product according to Claim 2, wherein the PVdF resin has a molecular weight of from 30.000 to 50.000.

4. Product according to any one of Claims 1, 2 or 3, wherein the one or more compatible thermoplastic resins comprise a thermoplastic poly(methylmethacrylate) (PMMA) resin.

5. Product according to Claim 4, wherein the thermoplastic PMMA resin exhibits a viscosity of from 7 to 17 P in 40% solution in a 95:5 mixture by weight of toluene and ethylene glycol methyl ether.

6. Product according to any one of the preceding Claims, wherein the weight ratio of PVdF/MMA is of from 80:20 to 40:60.

7. Product according to Claim 6, wherein the weight ratio of PVdF/PMMA is from 75:25 to 65:35.

8. Product according to any one of the preceding Claims, containing about 1 wt% of the flow promoting agent based on the total weight of the mixture.

9. Product according to any one of the preceding Claims, consisting of particles having a size from 1.5 µm to about three times the desired thickness of the coating.

10. Product according to any one of the preceding Claims, having an average particle size of from 0.03 to 0.05 mm

11. Process for coating a substrate with a pigmented PVdF-based coating, comprising the steps of :
(a) applying on the substrate a powder according to any one of Claims 1 to 10; and
(b) subjecting the applied powder to a heat treatment.

12. Process according to Claim 11, wherein the substrate has been previously covered with a primer coating.

13. Process according to either of Claims 11 or 12, wherein the heat treatment is carried out a temperature of from 180 to 260°C.

## Patentansprüche

1. Pigmentiertes PVdF-basierendes Pulverüberzugsprodukt, bestehend aus einer Mischung in Pulverform von:
(i) poly/(Vinylidenfluorid)[PVdF]Harz
(ii) einem oder mehreren kompatiblen thermoplastischen Harzen,
(iii) einem oder mehreren Pigmenten,
(iv) wahlfrei bis zu 3 Gew.% eines Fluß fördernden Mittels.

2. Produkt nach Anspruch 1, wobei das PVdF Harz ein Molekulargewicht von 10 000 bis 70 000 hat.

3. Produkt nach Anspruch 2, wobei das PVdF Harz ein Molekulargewicht von 30 000 bis 50 000 hat.

4. Produkt nach einem der Ansprüche 1, 2 oder 3, wobei das eine oder mehrere kompatible thermoplastische Harze ein thermoplastisches Poly(methylmethacrylat)(PMMA) Harz umfassen.

5. Produkt nach Anspruch 4, wobei das thermoplastische PMMA Harz eine Vikosität von 7 bis 17 P in 40% Lösung in einer 95:5 Gewichtsmischung von Toluol und Ethylenglycolmethylether zeigt.

6. Produkt nach einem der vorhergehenden Ansprüche, wobei das Gewichtsverhältnis von PVdF/PMMA von 80:20 bis 40:60 ist.

7. Produkt nach Anspruch 6, wobei das Gewichtsverhältnis von PVdF/PMMA 75:25 bis 65:35 beträgt.

8. Produkt nach einem der vorhergehenden Ansprüche, enthaltend etwa 1 Gew.% des Fluß fördernden Mittels, basierend auf dem Gesamtgewicht der Mischung.

9. Produkt nach einem der vorhergehenden Ansprüche, bestehend aus Teilchen mit einer Größe von 1,5 µm bis etwa dem Dreifachen der gewünschten Dicke des Überzugs.

10. Produkt nach einem der vorhergehenden Ansprüche mit einer Durchschnittsteilchengröße von 0,03 bis 0,05 mm.

11. Verfahren zum Überziehen eines Substrats mit einem pigmentierten PVdF-basierenden Überzug, umfassend die Stufen von:
(a) Aufbringen auf dem Substrat ein Pulver nach einem der Ansprüche 1 bis 10 und
(b) Aussetzen des aufgebrachten Pulvers einer Hitzebehandlung.

12. Verfahren nach Anspruch 11, wobei das Substrat zuvor mit einer Primärschicht bedeckt worden ist.

13. Verfahren nach entweder Anspruch 11 oder 12, wobei die Hitzebehandlung bei einer Temperatur von 180 bis 260°C durchgeführt wird.

## Revendications

1. Produit de revêtement en poudre à base de PVdF pigmenté, consistant en un mélange sous forme de poudre de:
(i) résine de poly(fluorure de vinylidène) [PVdF]
(ii) une ou plusieurs résines thermoplastiques compatibles;
(iii) un ou plusieurs pigments;
(iv) facultativement jusqu'à 3% en poids d'un agent favorisant l'écoulement.

2. Produit selon la revendication 1, dans lequel la résine PVdF a un poids moléculaire de 10000 à 70000.

3. Produit selon la revendication 2, dans lequel la résine PVdF a un poids moléculaire de 30000 à 50000.

4. Produit selon l'une quelconque des revendications 1, 2 ou 3, dans lequel une ou plusieurs résines thermoplastiques compatibles comprennent une résine thermoplastique de poly(méthacrylate de méthyle) (PMMA).

5. Produit selon la revendication 4 dans lequel la résine thermoplastique PMMA présente une viscosité 7 à 17 P dans une solution à 40% dans un mélange à 95:5 en poids de toluène et d'éther d'éthylène glycol méthyle.

6. Produit selon l'une quelconque des revendications précédentes dans lequel le rapport pondéral de PVdF/PMMA est de 80:20 à 40:60.

7. Produit selon la revendication dans lequel le rapport pondéral de PVdF/PMMA est de 75:25 à 65:35.

8. Produit selon l'une quelconque des revendications précédentes contenant environ 1% en poids d'un agent favorisant l'écoulement basé sur le poids total du mélange.

9. Produit selon l'une quelconque des revendications précédentes consistant en particules ayant une dimension de 1,5 µm à environ 3 fois l'épaisseur souhaitée du revêtement.

10. Produit selon l'une quelconque des revendications précédentes ayant une dimension moyenne de particules de 0,03 à 0,05 mm.

11. Procédé pour enduire un substrat d'un revêtement pigmenté à base de PVdF comprenant les étapes de:
(a) appliquer sur le substrat une poudre selon l'une quelconque des revendications 1 à 10; et
(b) soumettre la poudre appliquée à un traitement thermique.

12. Procédé selon la revendication 11 dans lequel le substrat a été au préalable recouvert d'une couche de fond.

13. Produit selon l'une quelconque des revendications 11 ou 12 dans lequel le traitement thermique est mis en oeuvre à une température de 180 à 260°C.
